# EUROPÄISCHE PATENTSCHRIFT

(11) **EP 1 579 307 B1**
(45) Veröffentlichungstag und Bekanntmachung des Hinweises auf die Patenterteilung: **31.10.2018**
(21) Anmeldenummer: 03789377.3
(22) Anmeldetag: 20.12.2003
(51) Int. Cl.: G01V 8/20, G06F 3/042

(54) **OPTOELEKTRONISCHE MESSANORDNUNG MIT FREMDLICHTKOMPENSATION SOWIE VERFAHREN ZUR PHASENKORREKTEN KOMPENSATION EINES SIGNALS DER MESSANORDNUNG**
OPTOELECTRONIC MEASURING SYSTEM WITH EXTRANEOUS LIGHT COMPENSATION, AND METHOD FOR CARRYING OUT THE PHASE-CORRECT COMPENSATION OF A SIGNAL OF THE MEASURING SYSTEM
SYSTEME DE MESURE OPTOELECTRONIQUE A COMPENSATION DE LA LUMIERE PARASITE ET PROCEDE DE COMPENSATION D'UN SIGNAL DU SYSTEME DE MESURE, EN CONFORMITE AVEC LA PHASE

(30) Priorität: 03.01.2003 DE 10300223
(43) Veröffentlichungstag der Anmeldung: 28.09.2005
(73) Patentinhaber: Reime, Gerd, 75328 Schömberg (DE)
(72) Erfinder: Reime, Gerd, 75328 Schömberg (DE)
(74) Vertreter: Reinhardt, Harry
(86) Internationale Anmeldenummer: PCT/EP2003/014697
(87) Internationale Veröffentlichungsnummer: WO 2004/061639

(56) Entgegenhaltungen:
- EP-A- 0 706 648
- WO-A-03/009476
- DE-A- 10 001 955

## Beschreibung

Die Erfindung betrifft eine optoelektronische Messanordnung mit einer Vorrichtung zur Fremdlichtkompensation nach dem Oberbegriff des Anspruches 1 sowie ein Verfahren zur phasenkorrekten Kompensation eines differenziellen optischen Signals dieser Messanordnung nach dem Oberbegriff des Anspruchs 6.

Aus der WO 03/009476 A1 ist ein optische Messsystem bekannt, bei dem mehrere Leuchtdioden als Lichtquellen Licht wechselseitig so aussenden, dass an einem Empfänger ein Gleichlichtsignal ohne taktsynchrone Wechsellichtanteile anliegt. Das Empfangssignal wird auf diese taktsynchronen Wechsellichtanteile untersucht. Bei Auftreten derartiger Wechsellichtanteile wird abhängig von der detektierten Phasenlage die Lichtleistung entweder der Leuchtdioden oder einer Kompensationsleuchtdiode so nachgeregelt, bis der taktsynchrone Wechsellichtanteil aus gemeinsam getakteten Lichtquellen gegenüber anderen gemeinsamen getakteten Lichtquellen wieder zu Null wird. Die Kompensationslichtquelle wird im Takt mit den anderen Lichtquellen, also gleichphasig betrieben. Es wird also so lange nachgeregelt, bis aus den verschiedenen Lichtstrecken von Takt zu Takt die gleiche Lichtmenge am Empfänger ankommt. Ergänzend werden die Lichtquellen zur Erfassung der Abstandes gegenüber den Lichtquellen in wenigstens einem weiteren Takt so geschaltet, dass der Raum vor den Lichtquellen weitestgehend gleichmäßig ausgeleuchtet wird und sich hieraus ein Wert zur Bestimmung der Entfernung des Objekts von den Lichtquellen ergibt.

Der WO 03/009476 A1 liegt das aus der EP 0 706 648 B1 bekannte optische Messsystem zu Grunde. In beiden Fällen wird mittels wenigstens zwei Leuchtdioden als Lichtquellen Licht wechselseitig so ausgesendet, dass an einem Empfänger ein Gleichlichtsignal ohne taktsynchrone Wechsellichtanteile anliegt. Das Empfangssignal wird auf diese taktsynchronen Wechsellichtanteile untersucht. Bei Auftreten derartiger Wechsellichtanteile wird abhängig von der detektierten Phasenlage die Lichtleistung der Leuchtdioden so nachgeregelt, bis der taktsynchrone Wechsellichtanteil wieder zu Null wird. Es wird also so lange nachgeregelt, bis aus den verschiedenen Lichtstrecken von Takt zu Takt die gleiche Lichtmenge am Empfänger ankommt. Üblicherweise werden vorzugsweise beide bzw. alle an der Lichtleistung beteiligten Lichtstrecken hierzu gegeneinander in ihrer Leistung geregelt.

Bei einer Anordnung nach der EP 706 648 B1 werden wenigstens zwei Lichtstrecken in ihrer Leistung gegeneinander geregelt. Bei einer Anordnung nach der älteren deutschen Patentanmeldung 101 33 823 sind es zur flächenmäßigen Positionserkennung, also zur Erkennung einer Position in X- und Y-Richtung schon vier Lichtstrecken und zur Bestimmung der Lage eines Objekts in Richtung der Z-Achse noch wenigstens eine weitere Lichtstrecke, so dass insgesamt fünf geregelte Lichtstrecken eingesetzt werden. Dabei benötigt jede dieser geregelten Lichtstrecken eine analoge oder digitale Leistungsregelung für einen LED-Strom von z.B. 0 -100 mA. In einem digitalen System kann die Leistungsregelung z.B. dann durch fünf Digital-Analogwandler oder durch fünf Pulsweitenregelungen erfolgen. Dabei ist auch eine Lösung denkbar, bei der mindestens eine Regelstufe ein Signal regelt, das dann zeitsequenziell auf mindestens je eine der beteiligten Leuchtdioden gegeben wird.

Basierend auf dem aus der EP 0 706 648 B1 bekannten Prinzip ist es aus der DE 100 01 955 A1 bekannt, das zur Regelung der Lichtleistung erforderliche Regelsignal zusätzlich so auszuwerten, das bestimmte Bewegungsmuster beim Annähern zum Beispiel eines Finger an eine Schaltfläche erkannt werden können, um einen Schaltvorgang zum Beispiel von einem Überwischvorgang zu unterscheiden.

Aus der DE 28 49 186 C2 ist ein optisches Messgerät mit Kompensationseinrichtungen bekannt, um Fehlereinflüsse zu kompensieren, die durch unterschiedliche Dämpfungen in Empfangslichtleitern entstehen können. Mit Hilfe von Wandlerelementen und einer elektronischen Schaltung wird dort ein elektronisches Kompensationssignal erzeugt.

In der DE 101 06 998 A1 wird bei einer Reflexlichtmessung ein zweiter Reflexlichtempfänger für ein zweites Empfangssignal phasenbezogen zu der wechselweisen Lichtsenderansteuerung amplitudenmäßig ausgewertet und das so gewonnen Auswertesignal, das den wechselseitigen optischen Kopplungen entspricht, wird gewichtet dem Ausgangssignal der Reflexlichtmessung hinzugefügt. Auch hier erfolgt eine Korrektur des Ausgangssignals mittels eines elektronischen Signals, aber nicht mittels einer weiteren Lichtquelle.

Ausgehend von diesem Stand der Technik liegt der vorliegenden Erfindung die Aufgabe zugrunde, eine optoelektronische Messanordnung und ein Verfahren zu schaffen, das mit einfachen Mitteln eine Kompensation des Empfangsignals zu Null erreicht, ohne dass aufwändig eine Vielzahl von Digital-Analogwandlern, Pulsweitenmodulatoren bzw. Leistungsumschalter benötigt werden.

Diese Aufgabe wird durch eine optoelektronische Messanordnung mit den Merkmalen des Anspruchs 1 und ein Verfahren mit den Merkmalen des Anspruches 6 gelöst.

Der Erfindung liegt das Prinzip zugrunde, dass dann, wenn eine Lichtquelle, bei einer Ausgestaltung nach Anspruch 2 eine LED, Licht aussendet, eine Photodiode, die dieses Licht z.B. nach Reflexion von einem Gegenstand erhält, ein taktsynchrones elektrisches Signal erzeugt. Sendet also z.B. die Leuchtdiode Licht mit einer Taktfrequenz von 40 KHz aus, wird die Photodiode ein entsprechendes Signal mit der gleichen Frequenz und nahezu gleicher Phase erzeugen. Betrachtet man nun bei zwei getaktet betriebenen Leuchtdioden den hier relevanten Wechsellichtanteil bezüglich der Sendephase von 0°, so kann dieser Wechsellichtanteil positiv und negativ sein, d.h. eine Phase von 0° oder 180° aufweisen, da eine Leuchtdiode bei einer Phase von 0° und die andere bei einer Phase von 180° abstrahlt. Dabei wird 0° mit positivem Vorzeichen identifiziert und 180° mit negativem Vorzeichen. Wird nun eine weitere Lichtquelle zugeschaltet, die unabhängig von den das Licht aussendenden Lichtquellen arbeitet, kann diese Licht in Amplitude und Vorzeichen phasenversetzt einstrahlen. Mit anderen Worten kann also die weitere Lichtquelle durch zusätzliche Lichteinstrahlung die Kompensation im Wesentlichen oder sogar alleine übernehmen. Dadurch wird über die Lichtleistung der weiteren Lichtquelle das taktsynchrone Empfangssignal in seiner Amplitude auch bei komplexen Messanordnungen mit Positions-, Richtungs- und Entfernungsdetektion so beeinflusst, dass das Empfangssignal zu Null wird.

Die weitere Lichtquelle kann so angeordnet sein, dass sie in einem bestimmten Abstand von der ersten Lichtquelle den gleichen reflektierenden Gegenstand beleuchtet, oder sie strahlt direkt zum Empfänger, ohne dass hier Licht vom reflektierenden Gegenstand reflektiert wird. Im ersten Fall kann damit die Leuchtdiode auch zur Abstandsdetektion eingesetzt werden, im zweiten Fall erfolgt die Abstandsdetektion ausschließlich über den Anteil der reflektierten Strahlung. In beiden Fällen sendet jedoch die weitere Lichtquelle ein zum Signal der anderen Lichtquellen versetztes Signal aus, dass in der Amplitude geregelt wird.

Während bei den sendenden Lichtquellen je nur ein Vorzeichen für die Phase vorhanden ist, kann im Empfänger, vorzugsweise einer Photodiode, das Empfangssignal das Vorzeichen wechseln. Dies ist z.B. der Fall, wenn zwei Lichtquellen so angeordnet sind, dass ein reflektierender Gegenstand ungefähr mittig zu den Lichtquellen das von beiden Lichtquellen empfangene Licht zur Photodiode reflektiert. Je nach Position ändern sich die Amplitude und das Vorzeichen des taktsynchronem Wechsellichtanteils im Empfangssignal.

Während im Stand der Technik zur Erzielung einer vollkommenen Unempfindlichkeit gegenüber Fremdlicht vorgeschlagen wurde, die Leistung der Lichtquellen so zu regeln, dass das Empfangsignal zu Null wird, wird nun auf die Leistungsregelung der Lichtquellen vorzugsweise vollständig verzichtet. Das bedeutet, dass vorzugsweise alle zur Positions- oder Abstandsdetektion benötigten Lichtquellen mit gleicher oder wenigstens fest vorbestimmter Leistung gemäß Anspruch 2 Licht abstrahlen. Damit bildet sich an der Photodiode, dem Empfänger, ein taktsynchrones Signal aus, mit je nach Reflexion entsprechender Amplitude und beliebigem Vorzeichen. Dieses Signal wird nun mit der weiteren Lichtquelle zu Null kompensiert, um wieder unempfindlich gegenüber Fremdlicht zu werden. Dabei hat diese Lichtquelle die besondere Eigenschaft, dass sie in der Leistung und im Vorzeichen veränderbar ist. Vorzugsweise strahlt diese Lichtquelle ihr Licht möglichst direkt in die Photodiode ein. Da sie auch die Lichtquelle zur Bestimmung des Abstands ersetzen kann, wird daher kein Mehraufwand benötigt. Im Gegensatz zu fünf Regelstufen für eine dreidimensionale Positionsbestimmung, von denen mindestens vier Regelstufen eine Leistung von z. B. 0 - 100 mA zu regeln haben, wird nun nur noch eine einzige Regelstufe mit einem wesentlich geringerem Leistungsbedarf benötigt. Gleichwohl können mit dem Licht dieser weiteren Lichtquelle alle möglichen Zustände der Reflexion in der Photodiode zu Null kompensiert werden.

Weitere Vorteile ergeben sich aus den Unteransprüchen.

Im folgenden wird die Erfindung anhand der beigefügten Figuren näher erläutert. Es zeigen:
- Fig. 1: Eine Schaltung für eine optoelektronische Messanordnung nach dem Stand der Technik,
- Fig. 2: eine Schaltung für eine optoelektronische Messanordnung zur Positionsbestimmung,
- Fig. 3: eine Schaltung für eine optoelektronische Messanordnung zur Positions- und Abstandsbestimmung,
- Fig. 4: eine Schaltung für die Beeinflussung des Ausgangswertes,
- Fig. 5: den Signalverlauf von Ausgangswert und Regelwert

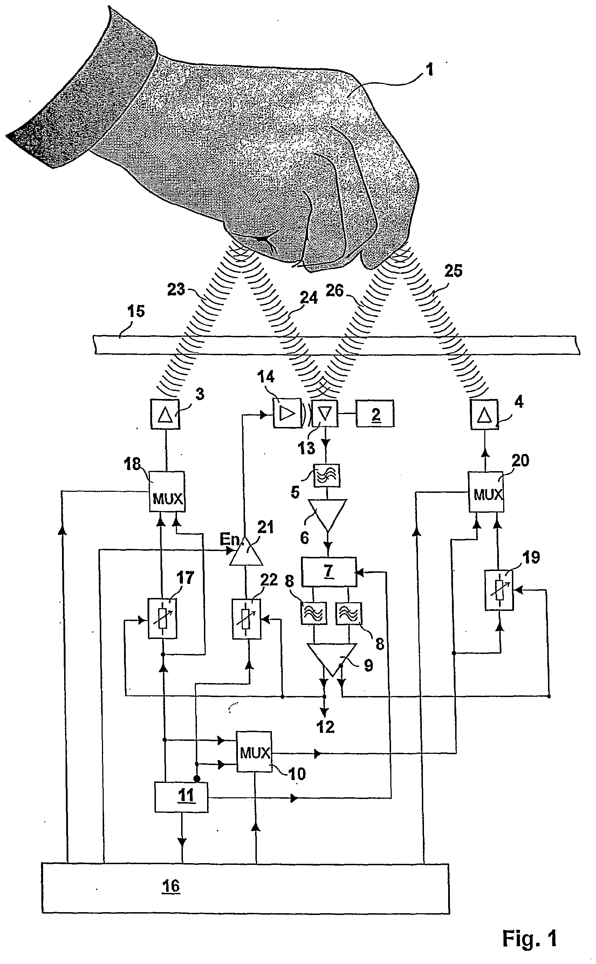

Figur 1 zeigt eine optoelektronische Messanordnung wie sie z. B. aus der EP 0 706 648 im wesentlichen bekannt ist. Wenigstens zwei erste Lichtquellen 3, 4, die im Ausführungsbeispiel Leuchtdioden sind, strahlen Licht durch ein für die jeweilige Wellenlänge des Lichts durchlässiges Medium hindurch, wobei die gesendeten Lichtstrahlen 23, 25 an einem Objekt, wie hier einer Hand, reflektiert werden und der reflektierte Lichtanteil durch die reflektierten Lichtstrahlen 24, 26 von einem Empfänger 13 empfangen werden. Der Empfänger 13 ist vorzugsweise eine Photodiode. Dem Empfänger 13 ist ferner eine Photostromkompensation 2 zugeordnet.

Grundsätzlich kommt als transparentes Medium jedes beliebige auch nichtgegenständliche Medium in Betracht, im Ausführungsbeispiel wird in diesem Bereich eine lichtdurchlässige Scheibe 15 angeordnet, die von der Hand z. B. zur Auslösung einer bestimmten Funktion berührt werden kann. Die Lichtquellen werden vom Taktgenerator 11 angesteuert, wobei die Lichtquelle 4 zur Positionsbestimmung mit einem gegenüber der Lichtquelle 3 invertierten Takt angesteuert wird. Damit senden die Lichtquellen 3, 4 zeitsequentiell getaktet, phasenweise Licht aus.

Das optische Messsystem, das im folgenden näher erläutert wird, sendet das Licht wechselseitig so aus, dass an einem Empfänger 13 möglichst ein Gleichlichtsignal ohne taktsynchrone Wechsellichtanteile anliegt. Zu diesem Zweck wird das Empfangssignal auf taktsynchrone Wechsellichtanteile untersucht. Bei Auftreten von taktsynchronen Wechsellichtanteilen wird die Lichtleistung der Lichtquellen 3, 4 so in Abhängigkeit von der detektierten Phasenlage nachgeregelt, dass der taktsynchrone Wechsellichtanteil wieder zu Null wird. Dies erfolgt gemäß Fig. 1 so dass zunächst das vom Empfänger 13 stammende Signal einem Hochpassfilter 5 zugeleitet wird, um möglichst Gleichlichtanteile zu eliminieren. Das verbleibende Signal wird in einem Vorverstärker 6 verstärkt und dann in einem Synchrondemodulator 7 wieder auf die beiden den Lichtstrecken in Form des gesendeten Lichtstrahls 23 und des reflektierten Lichtstrahls 24 einerseits und in Form des gesendeten Lichtstrahls 25 und des reflektierten Lichtstrahls 26 andererseits entsprechenden Signale zerlegt. Hierzu erhält der Synchrondemodulator 7 vom Taktgenerator 11 ebenfalls den Takt übermittelt. Die den jeweiligen Lichtstrecken entsprechenden Signale werden Tiefpassfiltern 8 zugeleitet und anschließend dem Vergleicher 9 zugeführt. Dort steht dann auch das Ausgangssignal 12 an.

Die so gewonnenen Signale werden einmal unmittelbar und einmal invertiert an die den ersten Lichtquellen 3, 4 zugeordneten Regeleinheiten 17, 19 übermittelt, die im Fall der Positionsbestimmung, bei der die ersten Lichtquellen 3, 4 wechselweise Licht aussenden, die Lichtintensität der Lichtquellen 3, 4 bestimmen und damit Einfluss auf das am Empfänger eingehende Empfangssignal nehmen. Im Ausführungsbeispiel wird das Signal nach dem Vergleicher 9 auf dem linken Pfad ebenfalls einer weiteren Regeleinheit 22 zugeleitet. Das Signal der Regeleinheit 22 wird einem Treiber 21 zugeleitet, der mittels Enable-Steuerung von der Ablaufsteuerung 16 bedarfsweise angesteuert wird, um über die als Kompensationslichtquelle ausgebildete weitere Lichtquelle 14, ebenfalls eine Leuchtdiode, den Anteil des Wechsellichts an der Photodiode zu Null zu machen und dadurch Fremdlichteinflüsse weitestgehend auszuschließen.

Im Schaltplan sind mehrere von der Ablaufsteuerung 16 ansteuerbare Multiplexer 10, 18, 20 vorgesehen, die insbesondere dann erforderlich sind, wenn die Vorrichtung gemäß Figur 1 nicht nur zur Positionsbestimmung sondern auch zur Abstandsbestimmung eingesetzt werden soll. Während bei der Positionsbestimmung die Leuchtdioden wechselweise strahlen, werden für die Abstandsbestimmung die Lichtquellen 3, 4 gleichzeitig beaufschlagt. Dies ist insbesondere aus der älteren Patentanmeldung 101 33 823 bekannt, auf die insofern hiermit ausdrücklich bezug genommen wird.

Für die Positionsbestimmung liefert der Taktgenerator an die Lichtquelle 4 ein gegenüber dem Signal für die Lichtquelle 3 invertiertes Signal, das einerseits der weiteren Lichtquelle 14 aber andererseits auch über den Multiplexer 10 der Regeleinheit 19 und Multiplexer 20 zugeleitet wird. Im Fall der Abstandsmessung hingegen wird dasselbe Signal, das an die Lichtquelle 3 über den Multiplexer 18 gegeben wird, gemäß dem oberen in den Multiplexer 10 eintretenden Pfad auch an die Lichtquelle 4 gegeben. Deutlich ist zu erkennen, dass bereits in diesem vereinfachten Ausführungsbeispiel drei Regeleinheiten 17, 19, 22 und mehrere Multiplexer 18, 20 zur Lösung dieser Aufgabenstellung erforderlich sind.

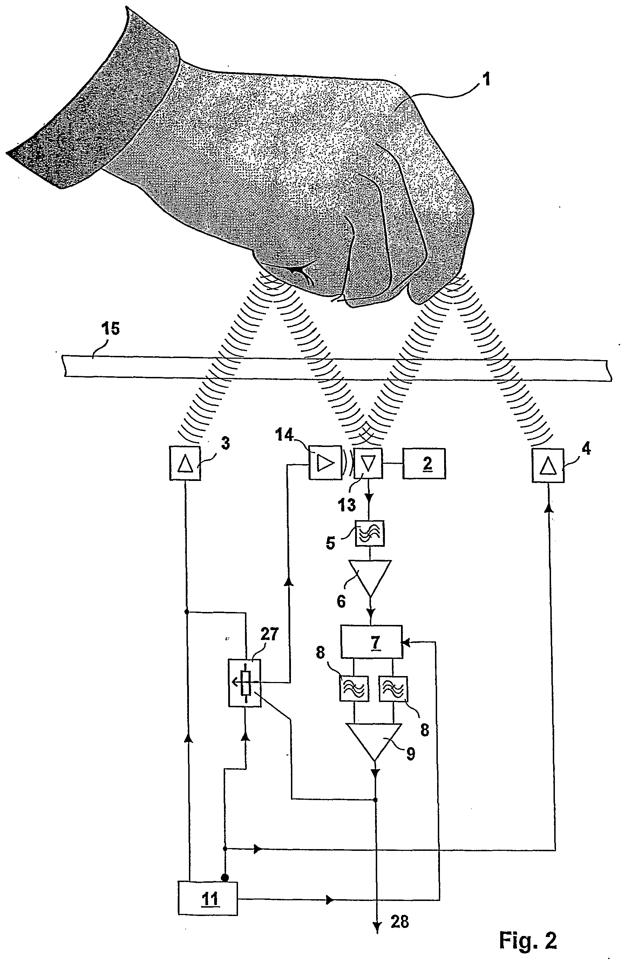

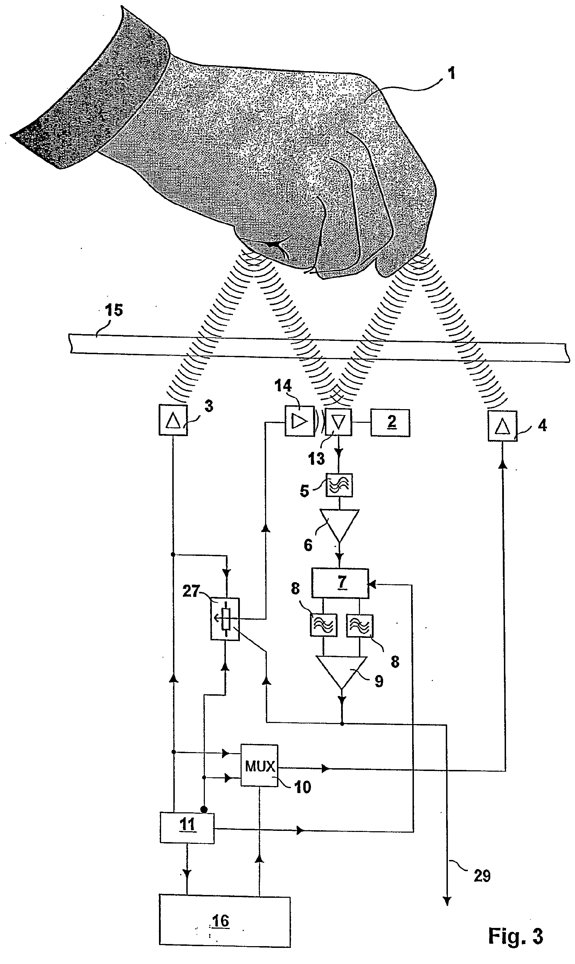

Gemäß den Figuren 2 und 3 wird nun die erfindungsgemäße Lösung erläutert, bei der in Figur 2 die reine Positionserfassung und in Figur 3 die Positions- und Abstandserfassung dargestellt sind. Bereits ein bloßer Vergleich der Schaltpläne macht deutlich, dass auf mehrere Regeleinheiten und zumindest einen Teil der Multiplexer verzichtet werden kann, obwohl diese Lösungen die gleiche Aufgabe lösen wie die Schaltung gemäß Fig. 1.

Bevor auf die einzelnen Ausführungsformen eingegangen wird, wird zunächst das grundsätzliche Prinzip erläutert. Für die Fremdlichtkompensation unter Regelung des taktsynchronen Wechsellichtanteils, der zwischen unterschiedlichen Phasen auftritt, zu Null, wird in den Ausführungsbeispielen gemäß Fig. 2 und 3 eine weitere Lichtquelle 14 eingesetzt, die eine von den ersten Lichtquellen 3, 4 unabhängige Lichtquelle ist. Diese weitere Lichtquelle 14 ist dem Empfänger 13 zugeordnet und in ihrer Lichtintensität in Amplitude und Vorzeichen regelbar. Vorzugsweise wird die weitere Lichtquelle 14 so angeordnet, dass sie direkt zum Empfänger 13 strahlt, ohne dass ihr Licht vom reflektierenden Gegenstand reflektiert wird. Im ersten Fall kann die Position des reflektierenden Gegenstandes im Verhältnis zur Anordnung der Photodiode nach den Lichtquellen bestimmt werden, im zweiten Fall kann ausschließlich über den Anteil der reflektierten Strahlung der Abstand zum Gegenstand bestimmt werden. Als Lichtquellen kommen grundsätzlich alle Arten von Lichtstrahlung aussendenden Elementen, aber insbesondere Leuchtdioden oder Laserdioden in Betracht.

Vorzugsweise die gesamte Regelung wird dieser weiteren Lichtquelle 14 zugeschrieben, wobei diese Lichtquelle "negatives Licht" aussendet. Was ist damit gemeint:
Am Empfänger 13 überlagern sich additiv die Sendesignale einerseits aus den Lichtstrecken, also die Signale stammend von den ersten Lichtquellen 3, 4, reflektiert an der Hand 1 mit dem Sendesignal der weiteren Lichtquelle 14. Da es bei diesem System im wesentlichen auf den Wechsellichtanteil ankommt, wird dieser Wechsellichtanteil bezüglich der Sendephase näher betrachtet. Dabei wird der einen Lichtquelle 3 die Sendephase von 0° und der anderen Lichtquelle 4 die Sendephase von 180° zugewiesen. Schaut man sich diesen Wechsellichtanteil nun bezüglich der Sendephase von 0° an, so kann dieser Wechsellichtanteil positiv und negativ sein, das heißt eine Phase von 0° oder 180° aufweisen. Bei einem Phasenversatz von 180° werden zwei Lichtquellen eingesetzt. Entsprechend phasenversetzt können die Signale bei mehreren Lichtquellen auftreten.

0° wird nun mit "positiv" identifiziert und 180° mit "negativ". Die weitere Lichtquelle 14, also der Kompensator, der hier nur auf den Empfänger 13 strahlt, wird nun so geregelt in Amplitude und Vorzeichen, gleichbedeutend mit Phase, dass der Wechsellichtanteil zu Null wird. Während die ersten Lichtquellen 3, 4 z. B. mit gleichbleibender oder fest vorgegebener Lichtintensität Licht aussenden, wird die weitere Lichtquelle 14 im Ausgangszustand, bei dem üblicherweise keine taktsynchronen Wechsellichtanteile vorliegen, in einem mittleren Bereich betrieben, so dass sie Licht mit einer mittleren Intensität ausstrahlt. Zur Fremdlichtkompensation bzw. zur Regelung des Wechsellichtanteils kann diese weitere Lichtquelle nun so taktsynchron geregelt werden, dass sie einerseits in der Amplitude aus diesem Mittelbereich nach unten oder oben heraus regelbar ist, andererseits aber auch durch die Ansteuerung phasenversetzt im Vorzeichen beeinflussbar ist.

Grundsätzlich können auch mehr als zwei Lichtstrecken entsprechend betrieben werden. Dabei können die Lichtquellen in einem beliebigen Winkel versetzt betrieben werden. So kann z.B. bei vier Messstrecken der Winkelkreis in beliebige Winkel aufgeteilt werden, vorzugsweise wird man in diesem Fall jedoch eine Winkelversatz von 90° wählen. Entsprechendes gilt für eine andere Anzahl von Messstrecken.

Betrachtet man Fig. 2, die Ausführungsform zur Positionsbestimmung, so sind zunächst die ersten Lichtquellen 3, 4 wie im Stand der Technik vorhanden, die vom Taktgenerator 11 wechselweise mit invertiertem Signal angesteuert werden. Das aus den Lichtstrecken stammende Signal geht am Empfänger 13 ein und wird wie im Stand der Technik über Hochpassfilter 5, Vorverstärker 6, Synchrondemodulator 7, Tiefpassfilter 8, und Vergleicher 9 geführt, um daraus nun das Ausgangssignal 28 zu erhalten. Dieses Ausgangssignal wird zugleich der Regeleinheit 27 zugeführt, die einerseits beide Takte erhält und entsprechend die weitere Lichtquelle 14 zur Kompensation ansteuert.

Bei dieser Positionsbestimmung gemäß Fig. 2 sendet z. B. die Leuchtdiode 3 mit konstanter Amplitude und Phase 0° also mit positivem Vorzeichen, während die Lichtquelle 4 ebenfalls mit konstanter Amplitude jedoch mit Phase 180° und damit negativem Vorzeichen sendet. Die weitere Lichtquelle 14 wird nun so in Vorzeichen und Amplitude geregelt, dass die Summe aller Wechsellichtsignale am Empfänger 13 zu Null wird. Hierzu werden der Regeleinheit 27 beide Takte 0° und 180° zugeführt. Das insofern durch die Regeleinheit 27 abgebildete Potentiometer verdeutlicht das Steuerelement, das in Mittelstellung die Amplitude Null hat. In den beiden Endanschlägen ist die Amplitude maximal mit der jeweiligen Phase bzw. dem Vorzeichen des Anschlusses. Grundsätzlich strahlt die weitere Lichtquelle 14 somit in Phase mit der oder den schwächeren Lichtquellen, je nachdem welche der ersten Lichtquellen 3,4 die schwächere oder die schwächeren sind.

Die Schaltung gemäß Fig. 3 ist ergänzend nun auch zur Abstandsbestimmung bestimmt und unterscheidet sich insofern im wesentlichen durch die Anordnung des Multiplexers 10. Während die Signalerfassung und die Bestimmung des Ausgangssignals 29 mit Figur 2 identisch ist, muss diese Schaltung nun auch dafür geeignet sein, dass die ersten Lichtquellen 3, 4 gleichzeitig Licht aussenden können. Hierzu wird, wie zur Figur 1 bereits erläutert, das Taktsignal einer Ablaufsteuerung 16 zugeleitet, die den Multiplexer 10 ansteuert. Für die Positionsbestimmung wird über den Multiplexer 10 ein invertiertes Signal an die Lichtquelle 4 übermittelt, so dass die Lichtquellen wie in Fig. 2 wechselweise Licht zur Positionsbestimmung aussenden. Bei der Abstandsbestimmung hingegen senden die Lichtquellen gleichzeitig Licht aus. Daher wird für die Abstandsbestimmung ein - nicht invertiertes - Signal an die Lichtquelle 4 übermittelt wird, das gleichzeitig auch an die Lichtquelle 3 übermittelt wird. Für die Abstandsmessung senden also die ersten Lichtquellen 3 und 4 beide mit konstanter Amplitude und Phase 0°, also mit positivem Vorzeichen. Die weitere Lichtquelle 14 wird bei dieser Abstandsmessung in der Amplitude so geregelt, dass die Summe aller Wechsellichtsignale am Empfänger 13 zu Null wird. Der Betriebsmodus für die Positionsbestimmung erfolgt abgesehen von der Zwischenschaltung des Multiplexers 10 identisch wie zu Figur 2 beschrieben.

Betrachtet man also nur die Summe der Wechsellichtsignale am Empfänger 13 und ordnet einer Phasenlage von 0° das Vorzeichen Plus zu und der Phasenlage von 180° das Vorzeichen Minus zu, so muss die weitere Lichtquelle 14 als Kompensator einmal mit positivem Vorzeichen und einmal mit negativem Vorzeichen senden. "Negatives Licht" ist also in diesem Falle nur modelliertes Licht, das vorzugsweise um 180° phasenverschoben ist.

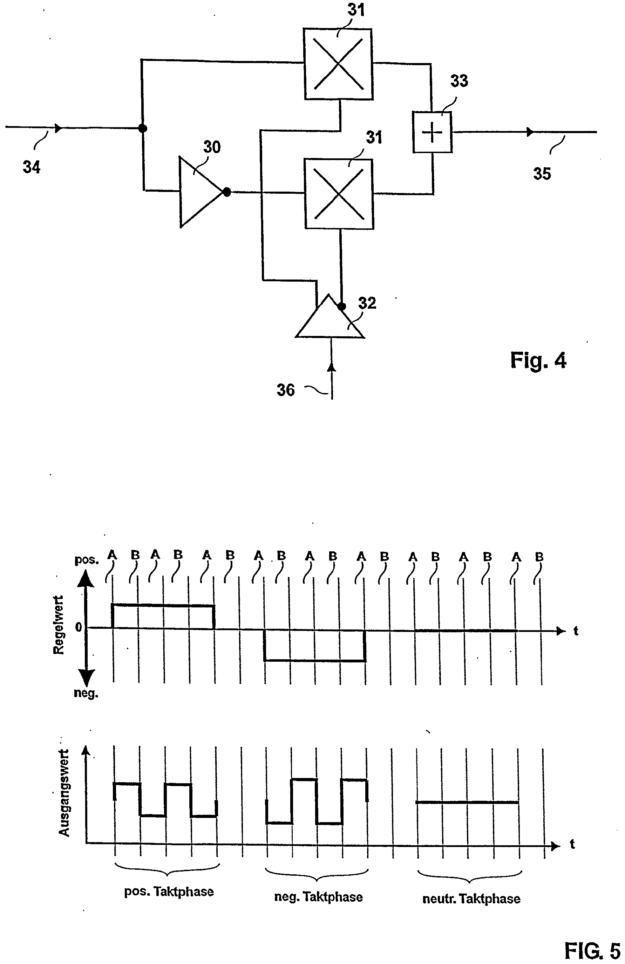

Figur 4 und 5 zeigen wie die Signale in der Regeleinheit 27 gemischt werden. Die Schaltung erhält einerseits das Eingangssignal 34 vom Taktgenerator 11. Ferner wird der Schaltung der Regelwert 36 zugeführt, der von den Ausgangssignalen 28 oder 29 in Fig, 2 bzw. 3 abgeleitet ist. Dieser Regelwert wird üblicherweise im ausgeglichenen Zustand in der Hälfte des vorhandenen Regelbereichs U, in diesem Falle z.B. bei U/2 liegen.

In der Regeleinheit wird nun einerseits das Eingangssignal 34 "Takt" einmal unmittelbar und einmal durch Inverter 30 invertiert Multiplizierern 31 zugeleitet. Die Multiplizierer erhalten ebenso den Regelwert vom Treiber 32 einmal invertiert und einmal nicht invertiert. Die so den Multiplizierern zugeführten Signale werden dort entsprechend multipliziert und dann über eine Additionsstufe 33 zusammengeführt, so dass sich als Ausgangswert 35 ein entsprechender größerer oder kleinerer Wert ergibt, der zur Ansteuerung der weiteren Lichtquelle 14 verwendet wird. Bei gleicher Ansteuerung aus dem Treiber 32 liefern die Multiplizierer 31 jeweils einen Signalanteil des Eingangssignals 34 "Takt" von z.B. 50% der Amplitude mit der Phase 0° und der Phase 180° an die Additionsstufe 33. Aufgrund gleicher Amplitude bei um 180° gedrehter Phase heben sich beide Signale auf und am Ausgang der Additionsstufe liegt nur ein Gleichspannungssignal ohne taktsynchrone Anteile an.

Weist man der Lichtquelle 3 den Takt A und der Lichtquelle 4 den Takt B zu, kann sich gemäß Fig. 5 folgendes Bild ergeben. Liegt z. B. gemäß Fig. 5 links aufgrund einer entsprechenden Reflexion ein positiver Regelwert vor, so wird das Ausgangssignal 35 eine positive Taktphase von 0° mit einem in der Amplitude größeren Signal im Takt B und einem in der Amplitude kleineren Signal im Takt A erzeugen. Bei entsprechend negativer Regelspannung gemäß Fig. 5, Mitte dreht sich die Phase entsprechend um. Das Ausgangsignal 35 versucht somit den taktsynchronen Anteil des Empfangssignals an der Photodiode zu Null zu kompensieren. der Ausgangswert an die weitere Lichtquelle je nach Taktphase A, B so angesteuert, dass sich eine entsprechende Regelspannung ergibt. Der an die weitere Lichtquelle gelieferte Ausgangswert 35 wird also so bestimmt, dass er in der Gegenphase so viel Licht erhält, dass sich ein positiver Regelwert ergibt.

Im umgekehrten Fall einer negativen Taktphase mit negativem Regelwert wird der Ausgangswert 35 entsprechend umgekehrt angesteuert, so dass hier nun die Taktphase A den größeren "Kompensationswert" erhält, so dass sich der Regelwert im Negativen bewegt. Die Regelspannung wird damit von der positiven Phase in die negative Phase verändert. Bei einem gleichbleibenden Regelwert wie in Figur 5 ganz rechts dargestellt erhält die weitere Lichtquelle 14 einen gleichbleibenden Ausgangswert und strahlt damit mit gleichbleibender Lichtleistung ein. Zusammengefasst wird also eine Schaltung geschaffen, die mit erheblich weniger Bauteilen in der Lage ist, Positions- und Abstandsmessung unter Fremdlichtkompensation durchzuführen.

### Bezugszeichenliste

- 1: Hand
- 2: Photostromkompensation
- 3,4: erste Lichtquelle
- 5: Hochpassfilter
- 6: Vorverstärker
- 7: Synchrondemodulator
- 8: Tiefpassfilter
- 9: Vergleicher
- 10: Multiplexer
- 11: Taktgenerator
- 12: Ausgangssignal
- 13: Empfänger
- 14: Weitere Lichtquelle
- 15: Lichtdurchlässige Scheibe
- 16: Ablaufsteuerung
- 17, 19: Regeleinheit
- 18, 20: Multiplexer
- 21: Treiber mit Enable-Steuerung
- 22: Regeleinheit
- 23, 25: Gesendeter Lichtstrahl
- 24, 26: Reflektierter Lichtstrahl
- 27: Regeleinheit
- 28, 29: Ausgangssignal
- 30: Inverter
- 31: Multiplizierer
- 32: Treiber mit invertierendem und nichtinvertierendem Ausgang
- 33: Additionsstufe
- 34: Einganssignal von 11
- 35: Ausgangswert
- 36: Regelwert

## Patentansprüche

1. Optoelektronische Messanordnung mit wenigstens zwei ersten Lichtquellen (3,4) die Licht zeitsequentiell getaktet, phasenweise aussenden, und mit wenigstens einem Empfänger (13) zum Empfang zumindest des von den ersten Lichtquellen (3,4) stammenden taktsynchronen Wechsellichtanteils,
sowie mit einer Vorrichtung zur Fremdlichtkompensation durch Regelung der in die Messanordnung durch wenigstens eine Lichtquelle eingestrahlten Lichtintensität, so dass der taktsynchrone Wechsellichtanteil, der zwischen unterschiedlichen Phasen auftritt, zu Null wird,
wobei die für die Regelung eingesetzte, wenigstens eine weitere Lichtquelle (14) eine von den ersten Lichtquellen (3,4) unabhängige Lichtquelle ist, die dem Empfänger (13) zugeordnet ist und die in Amplitude und Vorzeichen geregelt ist,
**dadurch gekennzeichnet, dass** die weitere Lichtquelle (14) im Ausgangszustand ohne taktsynchronen Wechsellichtanteil Licht mit einer mittleren Intensität abstrahlt, so dass sie aus dem Ausgangszustand einerseits in der Amplitude aus diesem Mittelbereich nach unten oder oben heraus regelbar ist und andererseits in der Phase phasenversetzt im Vorzeichen beeinflussbar ist.

2. Messanordnung nach Anspruch 1, **dadurch gekennzeichnet, dass** die ersten Lichtquellen (3,4) LEDs sind, die mit gleichbleibender, aber getakteter Lichtintensität Licht aussenden.

3. Messanordnung nach Anspruch 1 oder 2, **dadurch gekennzeichnet, dass** die weitere Lichtquelle (14) eine LED ist.

4. Messanordnung nach einem der vorhergehenden Ansprüche, **dadurch gekennzeichnet, dass** die weitere Lichtquelle (14) in Phase mit der oder den schwächeren Lichtquellen der ersten Lichtquellen (3,4) ein Signal aussendet.

5. Messanordnung nach einem der vorhergehenden Ansprüche, **dadurch gekennzeichnet, dass** zur Regelung einer das Licht in einer Phase aussendenden Lichtquelle (3,4) die weitere Lichtquelle (14) in Amplitude und Phase bzw. Gegenphase so geregelt wird, dass der Wechsellichtanteil zu Null wird.

6. Verfahren zur phasenkorrekten Kompensation eines differentiellen optischen Signals mit einer optoelektronischen Messanordnung mit wenigstens zwei ersten Lichtquellen (3,4), die Licht zeitsequentiell getaktet, phasenweise aussenden, und mit wenigstens einem Empfänger (13) zum Empfang zumindest des von den ersten Lichtquellen (3,4) stammenden taktsynchronen Wechsellichtanteils, wobei zur Fremdlichtkompensation die in die Messanordnung durch wenigstens eine Lichtquelle eingestrahlte Lichtintensität so geregelt wird, dass der taktsynchrone Wechsellichtanteil, der zwischen den verschiedenen Phasen auftritt, am Empfänger zu Null wird,
wobei wenigstens eine weitere Lichtquelle (14), die dem Empfänger (13) zugeordnet ist, unabhängig von den ersten Lichtquellen (3,4) in Amplitude und Vorzeichen geregelt wird,
**dadurch gekennzeichnet, dass** die weitere Lichtquelle (14) im Ausgangszustand ohne taktsynchronen Wechsellichtanteil Licht in einer mittleren Intensität abstrahlt, so dass sie aus dem Ausgangszustand einerseits in der Amplitude aus diesem Mittelbereich nach unten oder oben heraus regelbar ist und andererseits in der Phase phasenversetzt im Vorzeichen beeinflussbar ist.

7. Verfahren nach Anspruch 6, **dadurch gekennzeichnet, dass** die Lichtquellen (3,4) als LEDs Licht mit konstanter Lichtintensität aussenden.

8. Verfahren nach einem der Ansprüche 6 oder 7, **dadurch gekennzeichnet, dass** die weitere Lichtquelle (14) in Phase mit der oder den schwächeren Lichtquellen der ersten Lichtquellen (3,4) zugeschaltet wird.

## Claims

1. An opto-electronic measurement arrangement with at least two first light sources (3, 4) which emit light clocked in time-sequential manner and in phases, and with at least one receiver (13) for receiving at least the clock-synchronous alternating component originating from the first light sources (3, 4),
and with a device for compensating for extraneous light by regulating the intensity of light radiated into the measurement arrangement by at least one light source, so that the clock-synchronous alternating component, which occurs between different phases, becomes zero
wherein the at least one further light source (14) used for regulating is a light source which is independent of the first light sources (3, 4), which is associated with the receiver (13) and which is regulated in amplitude and sign,
**characterised in that**, in the starting state, the further light source (14) emits light without a clock-synchronous alternating component and with a medial intensity, so that from the starting state, the further light source, on the one hand, is configured to be regulated in its amplitude out of this medial range downwardly or upwardly and, on the other hand, is configured to be controlled in its phase phase-shifted in its sign.

2. A measurement arrangement according to claim 1, **characterised in that** the first light sources (3, 4) are LEDs, which emit light with a constant but clocked light intensity.

3. A measurement arrangement according to claim 1 or 2, **characterised in that** the further light source (14) is an LED.

4. A measurement arrangement according to any one of the preceding claims, **characterised in that** the further light source (14) emits a signal in phase with the weaker light source(s) of the first light sources (3, 4).

5. A measurement arrangement according to any one of the preceding claims, **characterised in that** for regulating a light source (3, 4) emitting light in one phase, the further light source (14) is regulated in amplitude and phase or anti-phase so that the alternating component becomes zero.

6. A method for the phase-correct compensation of a differential optical signal with an opto-electronic measurement arrangement with at least two first light sources (3, 4) which emit light clocked in time-sequential manner and in phases, and with at least one receiver (13) for receiving at least the clock-synchronous alternating component originating from the first light sources (3, 4) wherein, for the purpose of compensating for extraneous light, the intensity of the light radiated into the measurement arrangement by at least one light source is regulated so that the clock-synchronous alternating component, which occurs between the different phases, becomes zero at the receiver,
wherein at least one further light source (14), which is associated with the receiver (13), is regulated independently of the first light sources (3, 4) in amplitude and sign,
**characterised in that** in the starting state, the further light source (14) emits light without a clock-synchronous alternating component and with a medial intensity so that from the starting state, the further light source, on the one hand, is configured to be regulated in its amplitude out of this medial range downwardly or upwardly and, on the other hand, is configured to be controlled in its phase phase-shifted in its sign.

7. A method according to claim 6, **characterised in that** the light sources (3, 4) as LEDs emit light with a constant light intensity.

8. A method according to claim 6 or 7, **characterised in that** the further light source (14) is connected in phase with the weaker light source(s) of the first light sources (3, 4).

## Revendications

1. Système de mesure optoélectronique comportant au moins deux premières sources de lumière (3,4) qui envoient de la lumière de manière cadencée séquentiellement, par intermittence, et au moins un récepteur (13) pour la réception au moins de la partie de lumière alternative synchronisée avec la cadence provenant des premières sources de lumière (3,4), ainsi qu'un système pour la compensation de la lumière parasite par réglage de l'intensité lumineuse envoyée dans le système de mesure par au moins une source de lumière, de sorte que la partie de lumière alternative synchronisée avec la cadence, qui apparaît entre des phases différentes, devienne nulle,
dans lequel l'autre ou les autres sources de lumière (14) utilisé(e)s pour le réglage est/sont une source de lumière dépendante des premières sources de lumières (3,4) qui est associée au récepteur (13) et qui est réglée en amplitude et en signe,
**caractérisé en ce que** l'autre source de lumière (14) émet à l'état initial de la lumière avec une intensité intermédiaire sans partie de lumière synchronisée avec la cadence, de telle sorte qu'elle soit, d'une part réglable à partir de l'état initial en amplitude depuis ce domaine intermédiaire vers le bas et le haut, et d'autre part influençable en signe en décalage de phase dans la phase.

2. Système de mesure selon la revendication 1, **caractérisé en ce que** les premières sources de lumière (3,4) sont des LED qui émettent de la lumière avec une intensité lumineuse constante mais cadencée.

3. Système de mesure selon la revendication 1 ou 2, **caractérisé en ce que** l'autre source de lumière (14) est une LED.

4. Système de mesure selon l'une des revendications précédentes, **caractérisé en ce que** l'autre source de lumière (14) émet un signal en phase avec la ou les sources de lumières les plus faibles parmi les premières sources de lumière (3,4).

5. Système de mesure selon une ou plusieurs des revendications précédentes, **caractérisé en ce que** l'autre source de lumière (14) est réglée, en vue du réglage de la source de lumière (3,4) émettant la lumière, en amplitude et en phase ou opposition de phase, de telle sorte que la partie de lumière alternative devienne nulle.

6. Procédé de compensation, en conformité avec la phase, d'un signal optique différentiel avec un système de mesure optoélectronique comportant au moins deux premières sources de lumière (3,4) qui émettent de la lumière de manière cadencée séquentiellement, par intermittence, et au moins un récepteur (13) pour la réception au moins d'une partie de lumière alternative synchronisée avec la cadence provenant des premières sources de lumière (3,4), dans lequel, pour la compensation de lumière parasite, l'intensité lumineuse émise dans le système de mesure par au moins une source de lumière est réglée de telle sorte que la partie de lumière alternative synchronisée avec la cadence, qui apparaît entre les différentes phases, devienne nulle au niveau du récepteur,
dans lequel au moins une autre source de lumière (14) qui est associée au récepteur (13) est réglée indépendamment des premières sources de lumière (3,4) en amplitude et en signe, **caractérisé en ce que** l'autre source de lumière (14) émet à l'état initial de la lumière avec une intensité intermédiaire sans partie de lumière alternative synchronisée avec la cadence, de sorte qu'elle soit à partir de l'état initial, d'une part réglable en amplitude depuis ce domaine intermédiaire vers le bas et vers le haut, et d'autre part, influençable en signe en décalage de phase dans la phase.

7. Procédé selon la revendication 6, **caractérisé en ce que** les sources de lumière (3,4) en tant que LED envoient de la lumière avec une intensité lumineuse constante.

8. Procédé selon l'une des revendications 6 et 7, **caractérisé en ce que** l'autre source de lumière (14) est accordée en phase avec la ou les sources de lumière les plus faibles parmi les sources de lumière (3,4).
